# EUROPEAN PATENT SPECIFICATION

(11) **EP 2 179 644 B1**
(45) Date of publication and mention of the grant of the patent: **29.06.2011**
(21) Application number: 08425678.3
(22) Date of filing: 21.10.2008
(51) Int. Cl.: A01J 5/04

(54) **Manifold device for milking plants**
Sammelstück für Melkanlagen
Dispositif collecteur pour installations de traite

(43) Date of publication of application: 28.04.2010
(73) Proprietor: INTERPULS S.P.A., 42020 Albinea RE (IT)
(72) Inventor: Nicolini, Gabriele, 42042 Fabbrico RE) (IT); Sicuri, Roberto, 43100 Parma (IT)
(74) Representative: Robba, Pierpaolo

(56) References cited:
- WO-A-99/31968
- WO-A-2005/034612
- DE-A1- 10 132 132
- DE-A1-102005 015 916
- DE-A1-102005 017 094
- GB-A- 114 033
- GB-A- 1 160 900
- US-A- 4 537 152
- US-A- 4 807 566
- US-A- 4 936 254
- US-A1- 2007 272 160

## Description

### Technical field

The present invention relates to a manifold device for milking plants.

More precisely, the invention relates to a manifold device for milking plants to be used for milking animals with four teats, in particular cattle.

### Prior art

Milking plants for cattle and other animals are known, which comprise one or more milking machines.

According to the prior art, a milking machine essentially comprises a pneumatic vacuum pump, a milking assembly (also known as teat holding assembly), a pulsator, a manifold, a milk collection container and the ducts that suitably connect the above parts and form the vacuum and milk circuits.

Each milking assembly comprises milking barrels (four in case of cattle) to be applied to the animal's teats.

Each barrel is formed by a cylindrical case, or teat cup holder, generally made of metal or rigid resin and containing a rubber sheath or teat cup that easily adapts to the teat.

The lower end of the teat cup is permanently connected with the vacuum reservoir through the collection bucket or the milk transport duct.

The perfectly sealed hollow space between the teat cup holder and the teat cup is connected with the pulsator, which puts it alternately in communication with the vacuum reservoir and the atmosphere.

Since the interior of the teat cup is always under vacuum, in the period when vacuum is created also in the aforementioned hollow space, the teat remains free and milk is sucked through the manifold device into the bucket or the transport duct. On the contrary, in the period when the hollow space is put in communication with the atmosphere, the teat is subjected to a slight compression that, in practice, provides for a massaging action.

The pulsator controls the phases of milk sucking from the udder and teat massaging according to a predetermined frequency, generally in the range 50 to 60 pulsations/min for cows, and according to a predetermined pulsation ratio, i.e. the ratio between the time devoted to the sucking and relaxing phases, respectively.

The manifold device has the important task of receiving and combining milk coming from the milking barrels and of directing it to the collection container or the transport duct, while distributing and keeping the same vacuum degree and the same pulsation frequency in all the aforesaid barrels.

What stated above clearly shows that the manifold device can be considered as the main component of the milking assembly, and that its performance and its features affect in substantial manner the progress and the quality of the milking operation.

The manifold device mainly has the important function of collecting milked milk coming from the four sheaths coupled with the cow teats and housed in respective barrels, for directing it to the milk transport duct through a suitably sized discharge conduit, or to a dedicated collecting bucket.

Moreover, the manifold device also acts as a lung or vacuum reserve during milking, and for that reason it must be suitably shaped and sized.

DE 102005015916 discloses a manifold device for milking machines, internally equipped with guide surfaces protruding from the upper portion or cover of the device and integral thereto and defining a central space therebetween.

WO 2005034612 (A1) discloses a fluid treatment system specially devised for removing gas from the milk in a milking plant, including an internal volume housing a baffle adapted to control the flowrate of fluid within the volume so that fluid entering from a fluid inlet is pooled between a primary chamber wall and the baffle before flowing out of the primary chamber past the baffle to form a thin film laminar flow on at least part of the surface of a secondary chamber.

DE 102005017094 (A1) discloses a manifold device internally equipped with a flow guide element formed centrally with a hub through which a tension rod is passed so that flow guide element is retained within the device.

US 4807566 (A) discloses a milk claw comprising a flow separator provided with four vanes separating streams of milk and retained within the milk claw by a central shaft threaded in a turret mounted on top of a cover of the milk claw.

GB 1160900 (A) discloses a manifold device for milking plants comprising two hollow portions coupled with each other and a deflector member locate inside the volume enclosed between said hollow portions, wherein the deflector comprises a tube having at its base a stainless steel filter plate and wherein said tube carries rectangular vertical radial screens which divide the volume inside the hollow portions into four equal chambers, each with its own milk inlet tube.

DE 10132132 (A1) discloses a manifold device for milking plants comprising two hollow portions coupled with each other and a deflector member located inside the volume enclosed between said hollow portions and defined by rectangular vertical radial screens, wherein said deflector is supported within said volume by retaining means provided on the inner surface of said hollow portions which cooperate with said radial screens.

Actually, during milking, the flow rate of milk taken from the animal continuously changes, starting from an initial minimum, progressively increasing up to a maximum peak, and then progressively decreasing until becoming zero. In the condition of maximum flow rate of milk, the so-called phenomenon of milk plugs can occur along the pipes connecting the manifold to the milk duct or the collecting bucket, such a phenomenon consisting in the creation of discharge pipe sections completely filled with milk. Such completely filled sections isolate the milk duct or the bucket (vacuum source) from the manifold device, thereby preventing the creation inside the manifold of a constant vacuum degree, identical to the system vacuum degree available in the plant.

Such a phenomenon, generally associated with prior art manifold devices, causes undesired vacuum fluctuations or variations inside the manifold, which in turn mainly result in:
- variations of the vacuum degree inside the teat cups, the effect of which then appears on the outer surfaces of the teats of the cow being milked. Such phenomenon is of disturbance for the cow, the teats of which are, as known, an extremely sensitive part, and the disturbance is the stronger the greater the vacuum fluctuations. In certain cases, such a phenomenon can cause a degeneration of the teat tissue at the teat end portion, comprising the sphincter or milk channel, with a resulting local inflammation and/or infection that can originate mastitis;
- increase of the milking time, with a resulting increased stress of the concerned cow. As known, milking is unavoidably a bothering operation for the cow undergoing it, so that it is preferable that its duration is as short as possible;
- falling down of the milking assembly during the milking phase, with a resulting interruption of the milking in progress. Such a drawback can occur when the vacuum degree inside the sheaths connected to the manifold is particularly low, or generally no longer allows bearing the weight of the milking assembly applied to the animal's teats. Such a drawback is particularly bothering and results in a further increase of the milking time, besides being an additional disturbing action for the concerned cow.

A turbulent milk flow can moreover damage or break the cells of fat contained in milk, and this would in turn result in a strong decrease in the yield of milk transformation into milk derivatives, thereby sensibly affecting the milk economic value.

Thus, it is a first object of the invention to provide a manifold device that enables an optimum milk flow, thereby eliminating, or at least considerably reducing, the above drawbacks, while allowing at the same time maintaining the milk quality in terms of integrity of the fat cells forming milk.

Moreover, prior art manifold devices frequently originate tensile and torsional stresses in the ducts, possibly resulting in the sheath becoming detached, possibly only partially, from the teat to which it is applied. This phenomenon, as known, can cause a noxious admission of air contaminated by bacteria, which then contaminates both milk and the sphincter of the teat itself.

Thus, it is another object of the invention to provide a manifold device that does not suffer from the above drawback.

A further drawback of the prior art manifold devices is that milk contaminated by bacteria, if any, coming from a teat may go back up, through the corresponding duct connected to the manifold, towards a healthy teat because, inside the manifold device, due to the effect of vacuum, milk tends to be projected in all directions. In some cases, this unwanted phenomenon can eventually result in discarding the cow, which is no longer convenient from the production standpoint due to the effects of the infection that has propagated to all teats.

Thus, it is further object of the invention to provide a manifold device that does not suffer from the above drawback and prevents bacteria from going back up through non-contaminated ducts.

Moreover, the prior art manifold devices generally are not built so as to adapt themselves to the different types and ages of the animal. Actually, as known, the four teats of a cow are configured in regular manner only in young animals, whereas, as years go by and the number of calves suckled by a same animal increases, the divergence of one teat pair with respect to the other increases more and more. The phenomenon is due to the suction from a preferential and more easily accessible teat pair by a calf in order to be able to feed itself

Thus, it is an object of the invention to provide a manifold device that is suitable for animals of any age and with different teat configurations, thereby allowing an optimal milking of each type of cow.

A further, but not the last drawback of the prior art manifold devices is that they are predisposed to collect a lot of dirt due to their internal and external configurations.

As known, milk retained in interstices or cracks that are accessible with difficulty is not removed by the washing solution when milking has ended, and thus such milk becomes a source of bacterial charges that are noxious for both the quality of the fresh milked milk, which becomes contaminated when contacting the retained milk, and for the health of the cow being milked.

Thus, it is another object of the invention to provide a manifold device in which all parts can be easily washed and which does not suffer from milk and dirt accumulation.

According to the prior art, the manifold devices are to be made of a robust material, since they can undergo shocks and can be trampled on by the animals. Notwithstanding this, breakages frequently occur because of the heavy duty the manifold devices are subjected to.

Thus, it is a further, but not the last object of the invention to provide a manifold device that is more resistant than the prior art devices, whereby a longer duration and a greater reliability can be attained.

Moreover, the invention aims at providing a manifold device that can be implemented in cheap manner and can be manufactured on industrial scale with reduced costs.

The above and other objects are achieved by the manifold device as claimed in the appended claims.

### Description of the invention

The manifold device according to the invention essentially consists of two portions coupled to each other e.g. by means of a bayonet coupling, with a vacuum-tight gasket interposed therebetween.

The manifold device according to the invention internally has a deflector member acting so that milk flows according to an almost laminar motion.

Moreover, the manifold device according to the invention advantageously has a racy shape, without rough areas, in the parts licked by milk and thus it allows keeping a fluido-dynamic behaviour of the flowing milk which is close to the laminar flow.

Always according to the invention, the deflector member further advantageously has a shape enabling also an optimum internal cleaning of the device.

According to the invention, the qualities of the milk that has been milked are maintained even with a high flow speed, thanks to the advantageous internal shape of the manifold device and the presence of the deflector member.

Thanks to the shape of the deflector member, internally defining a central region where milk substantially does not pass, the manifold device according to the invention has a high stability of the vacuum degree inside it and consequently a high capability of milk discharge in any operating condition.

Moreover, thanks to the internal and external shapes of the device, cleaning is made easier, with advantages for the hygiene of the milking plant embodying said manifold.

The upper portion of the manifold device according to the invention comprises a cover having milk inlet nipples, and the cover has associated therewith a suitably shaped locking bracket and a pulsation cross.

Advantageously the pulsation cross has a variable attitude that avoids tensile and torsional stresses onto the ducts applied thereto and gives a greater versatility to the device.

The lower portion of the device consists of a small cup, e.g. of transparent plastics, which is preferably equipped with a supporting pad. According to an embodiment, the cup has an outer ring, e.g. of rubber or thermoplastic material, acting as a protection against shocks.

Advantageously, the bayonet coupling allows having no separate parts that could become lost when opening the device.

Advantageously moreover the external shape of the manifold device according to the invention is ergonomic and makes the grip easier and the use more practical.

Moreover the device has no interstices or points of accumulation of the impurities that, as known, abound in the working environment for which the device is intended.

Thanks to such feature of both its internal and external shape, the manifold device according to the invention can therefore be easily washed both externally and internally and allows therefore maintaining good hygienical conditions of the plant.

### Short description of the drawings

A preferred embodiment of the manifold device according to the invention will be described hereinafter by way of non limiting example, with reference to the accompanying drawings in which:
- Fig. 1 is a front view of the device according to the invention;
- Fig. 2 is a sectional view along line II - II of Fig. 1;
- Fig. 3 is an elevation of the deflector member;
- Fig. 4 is an elevation of the cup inside;
- Fig. 5 is an elevation of the bracket;
- Fig. 6 is a bottom view of the pulsation cross.

### Description of a preferred embodiment

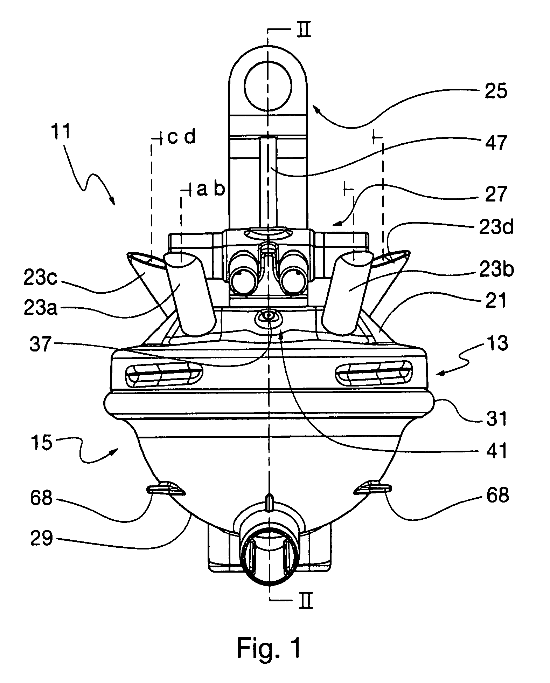

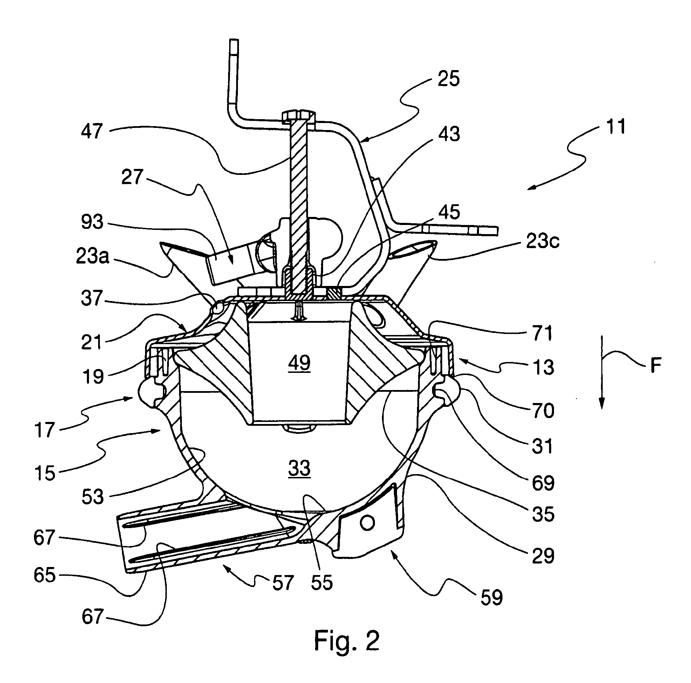

Referring to Figs. 1 and 2, the manifold device according to the invention, generally denoted 11, substantially consists of two hollow portions 13, 15, of substantially hemispherical shape, coupled to each other preferably by means of a "bayonet" coupling 17, with the interposition of a suitably shaped vacuum-tight gasket 19.

The first portion 13 of manifold device 11 according to the invention, or upper portion according to the orientation of Figs. 1 and 2, comprises a cover 21, which is equipped with four nipples 23a, 23b, 23c, 23d for milk inflow and has associated therewith a locking bracket 25 and a distributing member 27, referred to in the art as pulsation cross.

The second portion 15 of the device, or lower portion always according to the orientation of Figs. 1 and 2, comprises a small cup 29, sealing gasket 19 and preferably an external shock-absorbing ring 31, acting as a protection against side shocks.

According to the invention, a deflector member 35 is located inside volume 33 enclosed between portions 13, 15.

Cover 21 has, besides nipples 23a, 23b, 23c, 23d, a gauged vent hole 37, enabling introduction of a controlled amount of atmospheric air into volume 33 enclosed within manifold device 11, in order to enable a quick discharge of milk. Indeed, it is clear that the motor fluid pushing the transiting milk is represented by such an amount of atmospheric air entering from the outside.

Advantageously, according to the invention, the wall thickness in portion 41 of cover 21 where hole 37 is formed is approximately half the thickness in the remaining cover portion, so that the hole is made substantially self-cleaning thanks to the reduced friction as air passes through it.

Cover 21 preferably has circular shape and has a threaded, preferably blind cylindrical central insert 43, which is secured, for instance welded, to cover 21. Said insert 43 is to receive a screw 47 intended to secure locking bracket 25, as it will be better described hereinafter.

Cover 21 can preferably be made of stainless steel, in a wide range of models differing from one another both in respect of the diameters of nipples 23a, 23b, 23c, 23d (typically in the range from about 10 to 15 mm) and in their inclinations (about 30* to 50°), as well as in the shapes of the free ends thereof, with a perpendicular or an inclined cut.

According to the invention, a common feature of all models of manifold device 11 consists of the different inclinations of the nipple axes in the nipple pairs provided on cover 21. A first nipple pair 23a, 23b, or front pair, actually is more closed than the second pair 23c, 23d, or rear pair, which therefore is more divergent: that is, distance "cd" between the centres of the nipple ends in the latter pair is greater than distance "ab" between the centres in the first pair. Thanks to this feature, an optimal milking is possible for any kind of cow, be it a young cow, i.e. generally with regularly oriented teats, or a more aged cow, i.e. with more diverging teats.

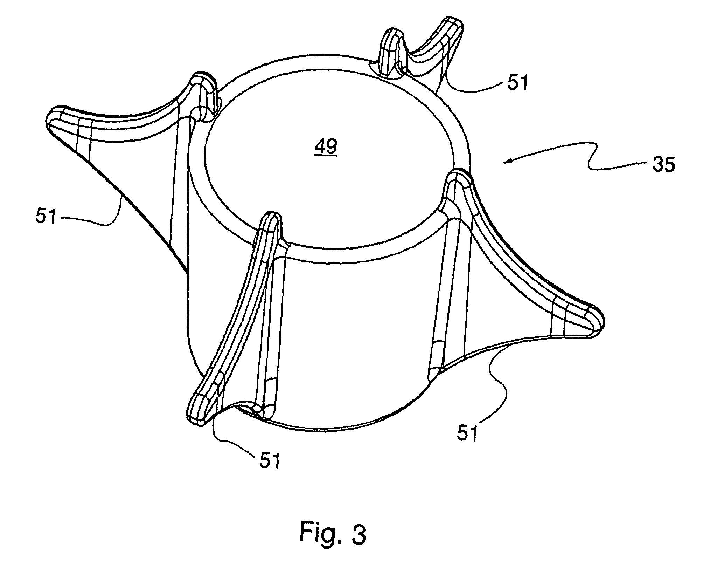

Referring to Fig. 3, deflector 35 located inside volume 33 is ring shaped and has a substantially frusto-conical central portion 49 intended to intercept and deflect the milk flows entering manifold device 11 and coming from the four nipples 23a, 23b, 23c, 23d.

Said portion 49 has associated therewith substantially triangular radial screens 51, in the illustrated example four screens mutually spaced by 90°, intended to support the deflector with respect to cup 29 and to divide the milk flow passing through volume 33.

Turning back to Fig. 2, according to the invention, the shape of deflector member 35 is defined in the whole so that milk flowing in vertical direction, i.e. from top to bottom in Fig. 2 in the direction of arrow F, is directed along internal walls 53 of cup 29 and flows towards cup bottom 55 according to a substantially laminar flow condition.

Advantageously, the frusto-conical shape of central portion 49 of deflector member 35, with the minor base directed towards bottom 55 of cup 29, i.e. downwards in Fig. 2, allows milk to flow along the shortest path inside volume 33. Moreover, such path is substantially the same for all of the four inlet jets from the four nipples 23a, 23b, 23c, 23d, and the discharge speed is therefore maximised.

Moreover, walls 53 of cup 29 will be advantageously smooth and without any roughness, so as to prevent foam generation when they are licked by the milk flow directed towards exhaust 57. Thanks to such a feature, milk jets entering volume 33 do not undergo hard frontal impacts against the inner walls of the manifold device, which impacts would hinder to some extent the optimal milk flow. Actually, as known, a breakage, if any, of the inlet milk jets, for instance because of roughness, in the presence of non-clean air coming from vent hole 37, could contribute to creating a foam rich in bacteria, which bacteria unavoidably would reduce the quality and hence the commercial value of the milked milk, due to both the contamination and the loss of the integrity of the fat cells forming the milk.

Moreover, still according to the invention, the deflection of the milk jets entering manifold 11 along walls 53 of cup 29 caused by deflector member 35 eliminates the risk that milk coming from a nipple goes back up towards the diametrically opposed nipple. Such a phenomenon, if present, would result in the risk of transmitting infections from one teat to another, and advantageously it is avoided thanks to the provision of deflector 35 shaped as described above.

Creation of a laminar milk flow along walls 53 of cup 29 further provides manifold device 11 with a greater stability of the vacuum degree inside it, and this allows achieving a more regular milking, without affecting the health of the animals. This result is possible in that, inside manifold 11 according to the invention, a central region is created, substantially corresponding to the internal volume of frusto-conical portion 49 of the deflector member, where milk does not pass. That central region acts as a lung forming a vacuum reserve, indispensable for coping with demand peaks occurring in correspondence with peaks in the flow rate of inflowing milked milk. Such a reserve allows at the same time maintaining a quick milk discharge, even at high flow rates, thereby contributing to speeding up the milking operations even in the heaviest conditions.

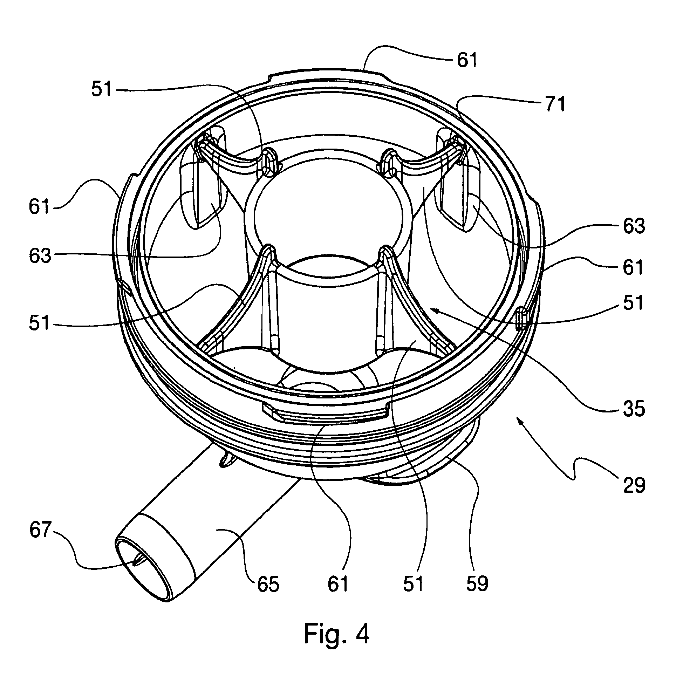

Referring in particular to Figs. 2 and 4, cup 29, which is preferably made of plastic material, which is transparent in order to allow observing the passage of milked milk inside the cup and is suitable for contact with foodstuff, is equipped in the lower portion with a supporting pad 59 of resilient material, partly received in a corresponding hollow provided in cup 29. Said supporting pad 59 allows maintaining an optimum attitude of manifold device 11 during milking, in case the manifold arrives in contact with the ground trampled on by the cow, by preventing the manifold from laterally tilting.

Cup 29 is equipped, at its circular end, with four wedge-shaped teeth 61 radially projecting outwards and allowing the cup to be coupled, through bayonet coupling 17, into respective seats provided in cover 21.

Moreover, cup 29 is internally equipped with coplanar radial projections 63, in the illustrated example four projections mutually spaced by 90°, intended to retain the outermost ends of screens 51.

Advantageously, cup 29 has a substantially hemispherical shape, resulting in an optimum resistance to shocks and crushing, due for instance to the fortuitous trampling on by the animals.

Always according to the invention, exhaust 57 is advantageously associated substantially with the centre of bottom 55 of cup 29. Such an arrangement contributes to maximising the milk discharge speed in all working attitudes of the manifold device, and it does not cause internal milk staunching when milking has ended.

Said exhaust 57 further includes a radially directed duct 65 extending over a length substantially comprised within the overall lateral size of manifold device 11. Thanks to this arrangement, said milk discharge duct 65 is protected from shocks. The same duct 65 further internally includes a set of parallel axial fins 67. This arrangement contributes to impart an oriented laminar motion to the milk flow leaving device 11 through duct 65, which motion increases the milk speed and hence improves the draining and the performance of the manifold device.

Turning back to Fig. 1, cup 29 is moreover externally equipped with side wings 68, in the illustrated example two diametrically opposed wings, which make manual grip easier and therefore make the cup more ergonomic.

If necessary, cup 29 can be equipped with a closure valve, internally located in the central portion, in correspondence with exhaust 57.

Referring to Fig. 2, cup 29 further has an annular seat 69 intended to house shock-absorbing ring 31, if any. Said shock-absorbing ring has the important function of preventing the manifold device from being damaged because of the unavoidable fortuitous shocks occurring during automatic detachment of the milking assembly.

Advantageously, according to the invention, said shock-absorbing ring 31 interferes with bottom edge 70 of cover 21 it is brought in contact with when bayonet coupling 17 is being locked: This feature prevents dirt from penetrating into the interstices existing between portions 13, 15 of the device, which interstices are practically impossible to clean without disassembling manifold device 11.

Said shock-absorbing ring 31 is preferably made of rubber or a thermoplastic material with a suitable hardness and geometry.

Moreover, sealing gasket 19 is arranged between portions 13, 15 of the device and is received in a suitable circular seat 71 formed in the upper part of cup 29, said gasket having the important task of ensuring vacuum tightness between cover 21 and cup 29.

Since the internal portion of gasket 19 is licked by transiting milk, the gasket should be made of a foodstuff-compatible material, for instance thermoplastic material suitable for contact with foodstuff, having characteristics of high stability with time without release of colouring substances.

The substantially rectangular elongated cross-sectional shape of gasket 19 is such that it ensures, besides vacuum tightness, also that no radial milk leak towards the outside occurs.

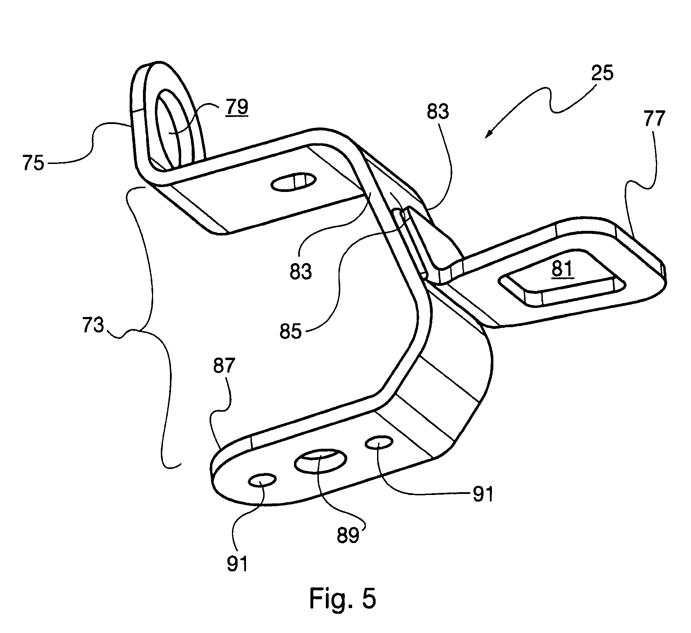

Referring to Figs. 2 and 5, the shape of bracket 25 is essential in order to obtain a balanced horizontal attitude of the whole milking assembly and to impart a high resistance to the stresses the whole device is subjected to in use. For this reason, bracket 25 has a substantially U-shaped central portion 73, which has associated therewith an upward directed front portion 75 and a horizontally directed rear appendage 77.

Locking bracket 25 allows securing manifold device 11, by means of a snap-hook (not shown) inserted into an annular through opening formed at forward end 75 of the bracket, to a rope of a cylinder for the automatic detachment (not shown), of a kind known in the art and used for automatically detaching the milking assembly.

Rear appendage 77 of locking bracket 25 has a trapezoidal through opening 81 and allows supporting the whole milking assembly turned downwards, i.e. turned upside down with respect to the arrangement shown in Fig. 2, through a coupling with a suitable male bracket (not shown) of stainless steel, in turn firmly secured for instance to a wall or to the structure of the milking plant. This arrangement is essential in that cleaning of the system can be optimally performed when milking has ended.

Said bracket 25 further includes a pair of half-circular relief portions 83 in the preferably oblique, upward-directed intermediate section 85 of U-shaped portion 73, said relief portions being intended to improve the manual grip should manifold device 11 be manually used.

Bracket 25 further has a bottom base section 87 with a central hole 89 through which blind threaded central insert 43, secured to cover 21, passes, and two side holes 91 each intended to receive a centring pin 45 provided on and secured to cover 21.

Advantageously, thanks to the described arrangement, bracket 25 can be oriented according two diametrically opposite positions about central insert 43.

Preferably, bracket 25 is made of stainless steel.

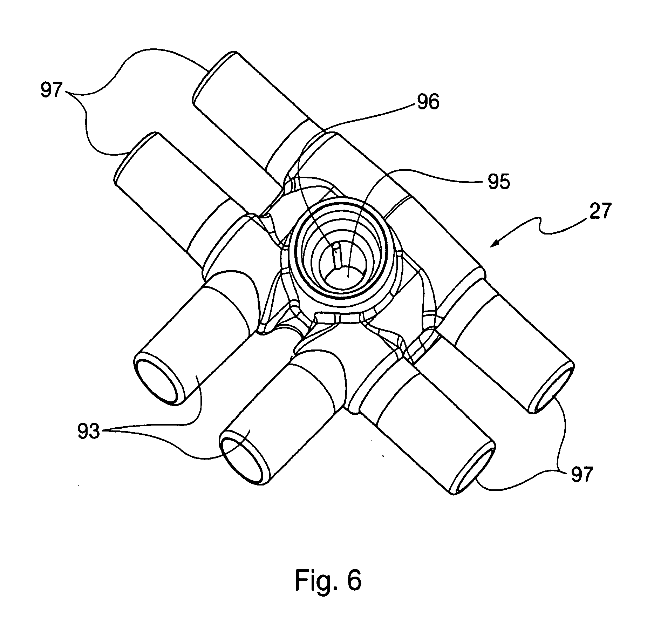

Referring to Figs. 1 and 6, pulsation cross 27 has the essential function of taking the pulsation signal generated by the pulsator, by means of a suitable twin connecting tube, and of distributing such signal alternately to both barrel pairs, with respective sheaths, being part of the milking assembly. As known, the presence of vacuum alternating with atmospheric air inside the barrels imparts a cyclical movement of opening and closure on themselves to the sheaths, which movement causes milk extraction from the cow's teats.

According to the invention, the pair of front nipples 93 in pulsation cross 27 is somewhat inclined downwards, i.e. towards cover 21 of manifold device 11: in this manner, they prevent the twin tube intended to be associated with said front nipples 93 from undergoing the typical, and often marked, S-shaped deviation at its end section close to the coupling with said nipples, since such tube is generally associated through resilient clamps with the underlying milk discharge tube.

A vertical throughhole 95 is provided centrally of pulsation cross 27 and it allows housing with a certain clearance screw 41 fastening bracket 25 onto cover 21.

Such a coupling, which is partly free since it is vertically slidable along the screw, allows a vertical displacement of pulsation cross 27 relative to cover 21, in the illustrated example a displacement of about 25 mm, as well as a certain rotation of the cross. Advantageously, thanks to such a variable attitude arrangement of the pulsation cross, during milking there is obtained an optimum attitude of the pulsation tubes associated with side nipples 97 of the pulsation cross and transmitting the pulsation signal to the barrels in the milking assembly. More particularly, thanks to such a variable attitude arrangement of pulsation cross 27, the risk is reduced of generating tensile stresses onto the side pulsation tubes associated with nipples 97 because of particular positions the collecting device may take during milking, which stresses result in the risk that the sheath slides off the animal's teat.

Said hole 95 is internally provided with parallel axial ribs 96, in the illustrated example three ribs spaced apart by 120°, intended to reduce the contact friction and hence to improve sliding of cross 27 along screw 47.

In order to completely cope with the different milking techniques available on the market, the pulsation cross can advantageously be manufactured according two different models. In a first model, or "standard" model, each inclined front nipple 93 distributes successively and alternately the pulsation signal to each side nipple pair 97. A second model, or "front rear" model, differs both geometrically and functionally from the first one in that the two inclined front nipples distribute the pulsation signal, always alternately, to the front and the rear nipples, respectively, in both side nipple pairs.

Several variants, all lying within the scope of the invention, are possible for the described manifold device.

## Claims

1. A manifold device (11) for milking plants, comprising:
- two hollow portions (13, 15) coupled with each other, a first portion being equipped with nipples (23a, 23b, 23c, 23d) for milk inflow into the device, and a second portion being equipped with an exhaust duct for milk outflow from the device,
- a deflector member located inside the volume enclosed between said hollow portions, said deflector member contributing to maintaining a laminar flow of the milk passing through said volume, **characterized in that**:
- the deflector member (35) is ring shaped and has a substantially frusto-conical central portion (49) intended to intercept and deflect the milk flows entering the device and coming from the inlet nipples, said frusto-conical portion (49) having its minor base directed towards the exhaust duct,
- inside the manifold device (11) there is defined a central region, substantially corresponding to the internal volume of the frusto-conical portion (49), said central region acting as a lung forming a vacuum reserve where milk does not pass,
- said frusto-conical portion (49) has associated therewith substantially triangular radial screens (51) intended to support the deflector inside the device and to divide the milk flow passing through the device,
- said second portion includes a substantially hemispherical cup (29) internally equipped with coplanar radial projections (63) arranged to retain the outermost ends of the screens (51) of the deflector member (35).

2. The device as claimed in claim 1, wherein said radial screens (51) and said radial projections (63) are four screens and four projections mutually spaced by 90° respectively.

3. The device as claimed in claim 1 or 2, wherein cup (29) is externally equipped with side wings (68), which make manual grip easier and therefore make the cup more ergonomic.

4. The device as claimed in claim 1 or 2 or 3, wherein cup (29) is equipped with a closure valve, internally located in the central portion, in correspondence with exhaust (57).

5. The device as claimed in any preceding claim, wherein said first portion includes a cover (21) equipped with four nipples for milk inflow and wherein a first nipple pair (23a, 23b) is less divergent than the second nipple pair (23c, 23d).

6. The device as claimed in claim 5, wherein the cover (21) is equipped with a gauged vent hole (37), the wall thickness in the cover portion (41) where said vent hole (37) is formed being approximately half the thickness in the remaining cover portion, so that the hole is made substantially self-cleaning thanks to the reduced friction as air passes through it.

7. The device as claimed in claim 1, wherein the cup (29) includes an external shock-absorbing ring (31) having the function of protecting the device from shocks, and wherein said cup is externally provided at its bottom with a supporting pad (59) of resilient material.

8. The device as claimed in claim 7, wherein the cup (29) further includes an annular seat (69) intended to house the shock-absorbing ring (31), said shock-absorbing ring (31) interfering with the bottom edge (70) of the cover (21) it is brought in contact with when the manifold device is closed.

9. The device as claimed in claim 8, wherein the exhaust (57) are advantageously associated substantially with the centre of the bottom (55) of the cup (29), and wherein said exhaust (57) further includes a radially directed duct (65) extending over a length substantially comprised within the overall lateral size of manifold device.

10. The device as claimed in claim 9, wherein said duct (65) further internally has a set of parallel axial fins (67).

11. The device as claimed in any preceding claim, including a locking bracket (25) associated with said cover, said bracket having a substantially U-shaped central portion (73) which has associated therewith an upward directed front portion (75) and a horizontally directed rear appendage (77), and wherein the rear appendage (77) of the locking bracket (25) has a through opening (81) and a pair of half-circular relief portions (83) in the intermediate section (85) of the U-shaped portion (73).

12. The device as claimed in claim 11, wherein the bracket (25) further has a base section (87) with a central hole (89) through which a threaded central insert (43), secured to the cover (21), passes, and two side holes (91) intended to receive each a centring pin (45) provided on and secured to the cover (21).

13. The device as claimed in claim 11 or 12, wherein a pulsation cross (27) is provided having a pair of front nipples (93) and two pairs of side nipples (97), the nipples in the front nipple pair being inclined towards the cover (21) of the manifold device (11), and wherein a hole (95) is provided centrally of the pulsation cross (27) to house with a certain clearance a screw (47) securing the bracket (25) onto the cover (21), in such a manner that said cross is partly freely rotatable and slidable relative to the screw and hence relative to the cover.

14. The device as claimed in any preceding claim, wherein the coupling between said two portions includes a bayonet coupling (17), and wherein a vacuum-tight gasket (19) is provided between the two portions (13, 15) of the device and is received in a circular seat (71) provided in the cup (29).

15. The device as claimed in claim 13, wherein said hole (95) provided centrally of the pulsation cross is internally provided with parallel axial ribs (96) intended to reduce the contact friction and hence to improve sliding of cross (27) along screw (47).

## Patentansprüche

1. Verteilervorrichtung (11) für Melkanlagen, welche Folgendes aufweist:
- zwei hohle Teile (13, 15), die miteinander gekoppelt sind, wobei ein erster Teil mit Nippeln (23a, 23b, 23c, 23d) für den Einstrom von Milch in die Vorrichtung ausgestattet ist und ein zweiter Teil mit einem Auslassgang für den Ausstrom von Milch aus der Vorrichtung ausgestattet ist,
- ein Deflektorelement, das sich im Inneren des zwischen den hohlen Teilen eingeschlossenen Volumens befindet, wobei das Deflektorelement zum Aufrechterhalten einer Laminarströmung der das Volumen durchströmenden Milch beiträgt, **dadurch gekennzeichnet, dass**:
- das Deflektorelement (35) ringförmig ist und einen im Wesentlichen kegelstumpfförmigen Mittelteil (49) aufweist, welcher vorgesehen ist, um die in die Vorrichtung hinein gelangenden und von den Einlassnippeln kommenden Milchströme aufzufangen und umzuleiten, wobei die kleinere Basis des kegelstumpfförmigen Teils (49) in die Richtung des Auslassgangs zeigt,
- im Inneren der Verteilervorrichtung (11) ein mittlerer Bereich definiert ist, welcher im Wesentlichen mit dem inneren Volumen des kegelstumpfförmigen Teils (49) korrespondiert, wobei der mittlere Bereich als Lunge wirkt, die eine Vakuumreserve bildet, wo die Milch nicht strömt,
- der kegelstumpfförmige Teil (49) mit ihm verbundene, im Wesentlichen dreieckige radiale Abschirmungen (51) aufweist, die dazu bestimmt sind, den Deflektor im Inneren der Vorrichtung zu stützen und den durch die Vorrichtung strömenden Milchstrom zu teilen,
- der zweite Teil eine im Wesentlichen halbkugelförmige Schale (29) aufweist, die intern mit planparallelen radialen Vorkragungen (63) ausgestattet ist, welche angeordnet sind, um die äußersten Enden der Abschirmungen (51) des Deflektorelements (35) zu halten.

2. Vorrichtung nach Anspruch 1, wobei die radialen Abschirmungen (51) und die radialen Vorkragungen (63) vier Abschirmungen und vier Vorkragungen sind, die einen gegenseitigen Abstand von jeweils 90° haben.

3. Vorrichtung nach Anspruch 1 oder 2, wobei die Schale (29) extern mit Seitenflügeln (68) ausgestattet ist, welche den manuellen Griff vereinfachen und daher die Schale ergonomischer machen.

4. Vorrichtung nach Anspruch 1 oder 2 oder 3, wobei die Schale (29) mit einem Verschlussventil ausgestattet ist, das sich intern in dem Mittelteil im Austausch mit dem Auslass (57) befindet.

5. Vorrichtung nach einem der vorherigen Ansprüche, wobei der erste Teil eine Abdeckung (21) aufweist, die mit vier Nippeln für den Milcheinstrom ausgestattet ist und wobei ein erstes Nippelpaar (23a, 23b) weniger divergent ist als das zweite Nippelpaar (23c, 23d).

6. Vorrichtung nach Anspruch 5, wobei die Abdeckung (21) mit einem geeichten Lüftungsloch (37) ausgestattet ist, wobei die Wanddicke im Abdeckungsteil (41), wo das Lüftungsloch (37) ausgebildet ist, ungefähr die Hälfte der Dicke in dem verbleibenden Abdeckungsteil aufweist, sodass das Loch dank der verringerten Reibung, wenn Luft hindurch strömt, im Wesentlichen selbstreinigend wird.

7. Vorrichtung nach Anspruch 1, wobei die Schale (29) einen äußeren stoßdämpfenden Ring (31) aufweist, welcher die Funktion des Schutzes der Vorrichtung vor Stößen aufweist, und wobei die Schale außen an ihrem Boden mit einem unterstützenden Polster (59) aus widerstandsfähigem Material versehen ist.

8. Vorrichtung nach Anspruch 7, wobei die Schale (29) des Weiteren ein ringförmiges Lager (69) aufweist, welches den stoßdämpfenden Ring (31) aufnimmt, wobei der stoßdämpfende Ring (31) in den unteren Rand (70) der Abdeckung (21) greift, mit welcher er in Berührung gebracht wird, wenn die Verteilervorrichtung geschlossen ist.

9. Vorrichtung nach Anspruch 8, wobei der Auslass (57) vorteilhafterweise im Wesentlichen der Mitte des Bodens (55) der Schale (29) zugeordnet ist und wobei der Auslass (57) des Weiteren einen radial ausgerichteten Gang (65) aufweist, der sich über eine Länge erstreckt, die im Wesentlichen in der gesamten lateralen Größe der Verteilervorrichtung beinhaltet ist.

10. Vorrichtung nach Anspruch 9, wobei der Gang (65) des Weiteren intern einen Satz von parallelen axialen Lamellen (67) aufweist.

11. Vorrichtung nach einem der vorherigen Ansprüche, einschließlich eines mit der Abdeckung verbundenen Verriegelungsbügels (25), wobei der Bügel einen im Wesentlichen U-förmigen Mittelteil (73) aufweist, mit dem ein nach oben gerichteter vorderer Teil (75) und ein horizontal gerichteter hinterer Fortsatz (77) verbunden sind und wobei der hintere Fortsatz (77) des Verriegelungsbügels (25) eine Durchgangsöffnung (81) und ein Paar halbrunde Reliefteile (83) in dem Zwischenabschnitt (85) des U-förmigen Teils (73) aufweist.

12. Vorrichtung nach Anspruch 11, wobei der Bügel (25) des Weiteren einen Basisabschnitt (87) mit einer zentralen Öffnung (89) aufweist, durch welche ein zentraler Gewindeeinsatz (43) führt, der an der Abdeckung (21) befestigt ist, und zwei Seitenlöcher (91), welche bestimmt sind, um jeweils einen Zentrierstift (45) aufzunehmen, der an der Abdeckung (21) vorgesehen und befestigt ist.

13. Vorrichtung nach Anspruch 11 oder 12, wobei ein Pulsationskreuz (27) vorgesehen ist, welches ein Paar vordere Nippel (93) und zwei Paar seitliche Nippel (97) aufweist, wobei die Nippel an dem vorderen Nippelpaar zu der Abdeckung (21) der Verteilervorrichtung (11) geneigt sind, und wobei in der Mitte des Pulsationskreuzes (27) ein Loch (95) vorgesehen ist, um mit einem bestimmten Abstand eine Schraube (47) aufzunehmen, die den Bügel (25) derart an der Abdeckung (21) fixiert, dass das Kreuz relativ zu der Schraube und damit relativ zu der Abdeckung teilweise frei drehbar und verschiebbar ist.

14. Vorrichtung nach einem der vorherigen Ansprüche, wobei die Kopplung zwischen den beiden Teilen eine Bajonettkupplung (17) aufweist und wobei eine vakuumdichte Dichtung (19) zwischen den beiden Teilen (13, 15) der Vorrichtung vorgesehen ist und in einem in der Schale (29) vorgesehenen runden Lager (71) aufgenommen wird.

15. Vorrichtung nach Anspruch 13, wobei das Loch (95), das in der Mitte des Pulsationskreuzes vorgesehen ist, intern mit parallelen axialen Rippen (96) versehen ist, die dazu bestimmt sind, die Kontaktreibung zu verringern und daher das Entlanggleiten des Kreuzes (27) an der Schraube (47) zu verbessern.

## Revendications

1. Dispositif collecteur (11) destiné à des installations de traite, comportant :
- deux parties creuses (13, 15) couplées l'une avec l'autre, une première partie étant dotée de manchons (23a, 23b, 23c, 23d) permettant au lait de s'écouler dans le dispositif, et une seconde partie étant dotée d'un conduit d'évacuation permettant au lait d'être évacué à partir du dispositif,
- un élément déflecteur situé à l'intérieur du volume délimité entre lesdites parties creuses, ledit élément déflecteur contribuant à maintenir un écoulement laminaire du lait passant à travers ledit volume, **caractérisé en ce que** :
- l'élément déflecteur (35) est configuré en forme de bague et présente une portion centrale tronconique (49) conçue pour intercepter et dévier les écoulements de lait entrant dans le dispositif et venant des manchons d'entrée, ladite portion tronconique (49) présentant sa petite base orientée vers le conduit d'évacuation,
- à l'intérieur du dispositif collecteur (11), se trouve définie une zone centrale, correspondant essentiellement au volume interne de la portion tronconique (49), ladite zone centrale agissant comme un poumon constituant une réserve de vide où le lait ne passe pas,
- ladite portion tronconique (49) présente, associés à elle, des cloisons radiales essentiellement triangulaires (51) conçues pour supporter le déflecteur à l'intérieur du dispositif et pour diviser l'écoulement de lait passant à travers le dispositif,
- ladite seconde partie comporte une coupe essentiellement hémisphérique (29) équipée à l'intérieur avec des parties radiales coplanaires en saillie (63) agencées pour retenir les extrémités les plus à l'extérieur des cloisons (51) de l'élément déflecteur.

2. Dispositif selon la revendication 1, dans lequel lesdites cloisons radiales (51) et lesdites parties radiales en saillie (63) comptent quatre cloisons et quatre parties en saillie distantes mutuellement de 90°, respectivement.

3. Dispositif selon la revendication 1 ou 2, dans lequel la coupe (29) est pourvue, à l'extérieur, d'ailerons latéraux (68), qui rendent plus facile une saisie manuelle et, en conséquence, rendent la coupe plus ergonomique.

4. Dispositif selon la revendication 1 ou 2 ou 3, dans lequel la coupe (29) est dotée d'une vanne de fermeture, placée à l'intérieur dans la partie centrale, en correspondance avec l'évacuation (57).

5. Dispositif selon l'une quelconque des revendications précédentes, dans lequel ladite première partie comprend un couvercle (21) doté de quatre manchons permettant l'entrée du lait et dans lequel une première paire de manchons (23a, 23b) est moins divergente que la seconde paire de manchons (23c, 23d).

6. Dispositif selon la revendication 5, dans lequel le couvercle (21) est pourvu d'un trou de ventilation calibré (37), l'épaisseur de paroi dans la partie de couvercle (41) dans laquelle ledit trou de ventilation (37) est formé représentant la moitié environ de l'épaisseur de la partie de couvercle restante, de sorte que le trou est réalisé de façon essentiellement autonettoyante grâce à la friction réduite lorsque l'air le traverse.

7. Dispositif selon la revendication 1, dans lequel la coupe (29) comporte une bague extérieure d'absorption de chocs (31) ayant pour fonction de protéger le dispositif contre les chocs, et dans lequel ladite coupe est dotée, à l'extérieur, au niveau de sa partie inférieure d'un patin de support (59) constitué d'un matériau élastique.

8. Dispositif selon la revendication 7, dans lequel la coupe (29) comporte, de plus, une embase annulaire (69) conçue pour loger la bague d'absorption de chocs (31), ladite bague d'absorption de chocs (31) interférant avec le bord inférieur (70) du couvercle (21) avec lequel il est mis en contact lorsque le dispositif collecteur est fermé.

9. Dispositif selon la revendication 8, dans lequel l'évacuation (57) est, de façon avantageuse, associée essentiellement avec le centre de la partie inférieure de la coupe (29), et dans lequel ladite évacuation (57) comporte, de plus, un conduit orienté de façon radiale (65) s'étendant sur une longueur comprise essentiellement dans les limites de la dimension latérale globale du dispositif collecteur.

10. Dispositif selon la revendication 9, dans lequel ledit conduit (65) comporte, de plus, situé en lui, un ensemble d'ailettes axiales parallèles (67).

11. Dispositif selon l'une quelconque des revendications précédentes, comportant un support de verrouillage (25) associé au dit couvercle, ledit support ayant une partie centrale essentiellement configurée en U (73) qui comporte, associée à lui, une partie avant dirigée vers le haut (75) et un appendice arrière dirigé horizontalement (77), et dans lequel l'appendice arrière (77) du support de verrouillage (25) comporte une ouverture de passage (81) et une paire de parties demi circulaires en relief (83) dans la section intermédiaire (85) de la partie configurée en U (73).

12. Dispositif selon la revendication 11, dans lequel le support (25) comporte, de plus, une section de base (87) dotée d'un trou central (89) à travers lequel passe une pièce centrale d'insertion filetée (43), fixée au couvercle (21), et deux trous latéraux (91) conçus pour recevoir chacun une broche de centrage (45) prévue sur le, et fixée au, couvercle (21).

13. Dispositif selon la revendication 11 ou 12, dans lequel une pièce en croix du pulsateur (27) est prévue comportant une paire de manchons avant (93) et deux paires de manchons latéraux (97), les manchons de la paire de manchons avant étant inclinés vers le couvercle (21) du dispositif collecteur (11), et dans lequel un trou (95) est prévu au centre de la pièce en croix du pulsateur (27) pour recevoir, avec un certain jeu, une vis (47) fixant le support (25) sur le couvercle (21), de telle manière que ladite pièce en croix peut, en partie, tourner librement et coulisser par rapport à la vis et, de ce fait, par rapport au couvercle.

14. Dispositif selon l'une quelconque des revendications précédentes, dans lequel le couplage entre les deux dites parties comporte un couplage à baïonnette (17) et dans lequel un joint d'étanchéité étanche au vide (19) est prévu entre les deux parties (13, 15) du dispositif et est reçu dans une embase circulaire (71) prévue dans la coupe (29).

15. Dispositif selon la revendication 13, dans lequel ledit trou (95) prévu au centre de la pièce en croix du pulsateur est doté, en interne, de nervures axiales parallèles (96) conçues pour réduire la friction de contact et ainsi, améliorer le coulissement de la pièce en croix (27) le long de la vis (47).
